# EUROPÄISCHE PATENTANMELDUNG

(11) **EP 4 116 088 A1**
(43) Veröffentlichungstag der Anmeldung: **11.01.2023**
(21) Anmeldenummer: 22178567.8
(22) Anmeldetag: 13.06.2022
(51) Int. Cl.: B32B 15/08, B32B 7/12, B32B 1/08, F16L 11/04

(54) **MEHRSCHICHTIGER SCHLAUCH MIT EINER METALLENEN SPERRSCHICHT UND BRANDSCHUTZ**

(30) Priorität: 07.07.2021 DE 102021207157
(71) Anmelder: ContiTech USA, Inc., Fairlawn, OH 44333 (US)
(72) Erfinder: Onken, Kristian, 30165 Hannover (DE)
(74) Vertreter: Continental Corporation

(57) **Zusammenfassung**

Beschrieben wird ein mehrschichtiger Schlauch, der folgende Schichten enthält:
- eine einlagige oder mehrlagige äußere Schicht auf Basis mindestens eines Elastomers und
- eine innere Schicht, umfassend ein metallenes Mehrschichtlaminat, dadurch gekennzeichnet, dass das metallene Mehrschichtlaminat an den beiden Außenseiten jeweils eine Kunststoffschicht umfasst und zwischen diesen beiden Kunststoffschichten mindestens eine Metallschicht vorhanden ist, wobei auf den jeweils beiden Seiten der mindestens einen Metallschicht jeweils eine Klebeschicht vorhanden ist,
ein Verfahren zu dessen Herstellung und dessen Verwendung, insbesondere als Trinkwasserschlauch.

## Beschreibung

Die vorliegende Erfindung betrifft einen mehrschichtigen Schlauch, ein Verfahren zu dessen Herstellung und dessen Verwendung, insbesondere als Trinkwasserschlauch.

Bei bestimmten Schläuchen (z.B. Trinkwasser-, Lebensmittel-, Pharma-, Klima- oder Gasschläuchen) ist es wichtig, dass die Schlauchmaterialien keine Inhaltsstoffe in das zu fördernde Medium abgeben bzw. der Schlauch eine sehr geringe Permeation (hohe Sperrwirkung) aufweist. Insbesondere bei Trinkwasser-, Lebensmittel- und Pharmaschläuchen sind die beiden Punkte (Migration + Permeation) von besonders hoher Bedeutung, da sonst die menschliche Gesundheit beeinträchtigt würde. Daher wurden vom Gesetzgeber umfangreiche Regularien erlassen, welche das Ziel haben, eine Kontamination des zu fördernden Mediums zu verhindern bzw. auf ein Minimum (technisch unvermeidbares Limit) zu reduzieren.

Die Entwicklung eines solchen Schlauches, insbesondere eines Trinkwasserschlauches auf Elastomerbasis, ist eine technisch anspruchsvolle Aufgabe, da die nach den aktuell gültigen deutschen Regularien (KTW-Bewertungsgrundlage (KTW-BWGL), Elastomerleitlinie (ELL), EN 16421 (W270) und EU 10/2011) zur Herstellung verwendbaren Rohstoffe in ihrer Art und ihrer Einsatzmenge stark reglementiert sind (Positivliste) und bestimmte Grenzwerte/Parameter nicht überschritten werden dürfen (u.a. spezifische Migrationswerte, Geruch, Geschmack, Schaumbildung, TOC-Gehalt, Mikrobenwachstum).

Mit einem herkömmlichen Elastomerschlauch, welcher ausschließlich aus Elastomerschichten aufgebaut ist, sind diese umfangreichen Anforderungen nicht zu erfüllen. Auch mit einem Elastomerschlauch mit einer eingebrachten Kunststoffschicht als funktionelle Sperrschicht (Multimaterial-Multilayer-Schlauch) sind die Anforderungen nicht einfach und zuverlässig zu erfüllen. Zudem müssen alle Schichten/Lagen (Innenschicht, Zwischenschicht, Außenschicht) sowie der Festigkeitsträger des Schlauches mit den Regularien übereinstimmen, was die Bereitstellung eines geeigneten Schlauches zusätzlich erschwert.

Zudem ergibt sich durch die starke Reglementierung (Einschränkung der erlaubten Rohstoffe) ein weiteres Problem, sofern der Trinkwasserschlauch neben der aktuellen Trinkwassergesetzgebung (KTW-BWGL Stand 09.03.2021, Elastomerleitlinie Stand 16.03.2016 inklusive ihrer aktualisierten Positivliste Stand 11.09.2020, DIN EN16421: 2015-05 (Deutsche Fassung EN 16421:2014)) auch noch weitere Normen/Zulassungen erfüllen muss, wie z.B. die Brandschutzvorschrift der Deutschen Bahn (DIN EN 45545-2: 2020-10). Die DIN EN 45545-2 fordert u.a. die Durchführung von Brandprüfungen, bei denen die Parameter "Toxizität der Rauchgase", "Rauchgasdichte" und der "Sauerstoffindex (LOI)" zu prüfen sind.

Eine effektive Methode, um die Migration von Bestandteilen aus der Schlauchwand in das Medium zu verhindern bzw. die Permeation zu verringern, ist das Einbringen einer Metallschicht (totale Barriereschicht) als Zwischenschicht in den Schlauch. Die Art, wie diese Metallschicht eingebracht wird (z.B. als Metallfolie gewickelt oder als Metall aufgedampft) und wie deren Haftung zu der darunter- bzw. darüber liegenden Schichten erfolgt (d.h. Metall zu Kunststoff oder Elastomer), ist sehr unterschiedlich.

Ein besonders kritischer Punkt bei der Verwendung einer Metallfolie (z.B. Aluminiumfolie) als Sperrschicht in einem Elastomerschlauch ist die Haftung der Metalloberfläche an der angrenzenden Polymerschicht. Im Normalfall ist eine gute Haftung von reinem Metall zu einem Polymer/Elastomer nur mit Hilfe eines Haftvermittlers bzw. Klebstoffystems möglich. Ohne deren Einsatz ergibt sich keine ausreichende und langanhaltende Haftung zwischen Metall- und Polymeroberfläche und der Schlauch würde an dieser Stelle unter Belastung delaminieren.

Es sind unterschiedliche Methoden beschrieben, wie die Haftung von Metall zu Polymeroberfläche erreicht werden kann.

Eine Möglichkeit ist dabei, einen Haftvermittler in die Polymermatrix einzuarbeiten. In der EP 0 895 013 B1 wird ein flexibler Sauerstoffbarriereschlauch offenbart, welcher als Haftvermittler ein Ethylen-Propylen-Dien-Polymethylen mit einem Polybutadien-Maleinsäureanhydrid-Adduktharz verwendet. Über die Höhe der Haftwerte werden keine Angaben gemacht, zudem sind diese Substanzen nicht in der Trinkwassser-Positivliste enthalten, was einen Einsatz somit in diesem Bereich ausschließt.

Eine weitere Möglichkeit ist die Modifikation der Metalloberfläche zur Haftungsoptimierung. In der EP 1 226 381 B1 wird ein elastomerer Kühlmittel-Klimaschlauch offenbart, bei dem die Metalloberfläche mit einer Silanverbindung modifiziert wird. Zudem wird dem Haftgummi ein Zinksalz der Methacrylsäure beigefügt, um die Metallhaftung zu gewährleisten. Auch hier sind die verwendeten Chemikalien ein Problem in Bezug auf die Trinkwasser-Positivliste.

Eine weitere Möglichkeit einen guten Haftverbund zwischen einer Metallschicht und einer Polymerschicht zu erreichen, ist die Verwendung einer separaten Klebstoffschicht, welche als Haftvermittlerschicht zwischen Metalloberfläche und Kunststoffschicht aufgebracht wird. Mittels dieser Technik lassen sich sogenannte metallene Mehrschichtlaminate (z. B. Kunststoff/Kleber/Metall/Kleber/Kunststoff) herstellen.

Eine solche metallene Mehrschichtlaminate in komplexer Ausfertigung für die Herstellung von Tuben wird z. B. in der EP 2 874 811 B1 beschrieben.

Ein einfach oder komplex aufgebautes metallenes Mehrschichtlaminat kann somit theoretisch als Sperrschicht (Zwischenschicht) im Elastomerschlauch verwendet werden. Allerdings muss diese für die Anwendung in einem Elastomerschlauch für die Trinkwasseranwendung zusätzliche wichtige Eigenschaften aufweisen. Diese sind u. a. Warmhaftung, Dampfsterilisierbarkeit, Flexibilität und Lebensmittelzulassung.

So müssen z.B. alle Lagen des metallenen Mehrschichtlaminates, insbesondere die Kleberschicht, die extremen Verarbeitungsbedingungen eines Elastomerproduktes (insbesondere die Vulkanisation = Temperatur >100°C + Druck + Feuchtigkeit) überstehen. An diesen harschen Bedingungen scheitern bereits in der Praxis die meisten kommerziellen metallenen Mehrschichtlaminate.

Zudem muss bei einem elastomeren Trinkwasserschlauch garantiert sein, dass alle Schichten des metallenen Mehrschichtlaminates (d. h. Kunststoff-, Kleber- und Metallschicht) den Trinkwasserregularien bzw. der Verordnung EU 10/2011 entsprechen. Auch dieser Anspruch reduziert zusätzlich die Anzahl der kommerziell erhältlichen metallenen Mehrschichtlaminate maßgeblich.

Ein Lösungsansatz für dieses Problem wird in der DE 10 2008 060 885 A1 offenbart, welche einen 2-Komponenten-Polyurethankleber beschreibt, welcher bis 135°C dampfsterilisierbar ist und deren Inhaltsstoffe sämtlich eine Lebensmittelzulassung haben.

Ein weiteres Problem ist, dass der Kleber nicht durch die in der Gummi-Vulkanisation auftretenden Spalt- und Zersetzungsprodukte (insbesondere der Vernetzungsmittel) zerstört werden darf. Die Eignungsprüfung der Folie kann somit nur an den vorgesehenen Elastomermischungen geprüft werden, da in der Vulkanisationsphase zahlreiche chemische Reaktionen ablaufen, deren Auswirkungen auf die Bestandteile des metallenen Mehrschichtlaminates sich nicht im Voraus abschätzen lassen.

Grundsätzlich muss eine ausreichende Lagenhaftung des metallenen Mehrschichtlaminates in der Kälte und Wärme gegeben sein, damit keine Delaminierung der Schlauchlagen im späteren Schlaucheinsatz (Betriebseinsatz) auftritt.

Die Flexibilität des metallenen Mehrschichtlaminates ist ein weiterer wichtiger Punkt, da diese maßgeblich die spätere Flexibilität des Elastomerschlauches bestimmt. Insbesondere die Schichtdicke der Metallschicht ist für die spätere Flexibilität des Elastomerschlauches entscheidend.

Es stellt somit eine große Herausforderung dar, nur mit den erlaubten Stoffen der Positivliste einen flexiblen Schlauch zu konstruieren, der beide Anforderungen (Trinkwasser + Brandschutz) erfüllt. So sind z.B. effektive Brandhemmer wie halogenhaltige Flammschutzmittel, Organophosphorverbindungen oder Antimontrioxid nicht in der Trinkwasser-Positivliste (Aktualisierte Positivliste zur Elastomerleitlinie Stand 11.09.2020) gelistet. Dennoch muss ein Trinkwasserschlauch, welcher z.B. in einem Waggon der Deutschen Bahn als Trinkwasserleitung verbaut wird, beide Vorschriften erfüllen.

Die Aufgabe der vorliegenden Erfindung bestand daher darin, eine Lösung zu finden, wie die oben genannten Nachteile des Standes der Technik verbessert werden können. Insbesondere soll ein Schlauch, insbesondere ein Trinkwasserschlauch, bereitgestellt werden, der diese partiell "widersprüchlichen" regulatorischen Anforderungen dennoch erfüllt, also ein flexibler Trinkwasserelastomerschlauch, der die genannten Brandschutzanforderungen erfüllt. Ferner sollte die Lagenhaftung in allen Schichten des Schlauches (insbesondere der metallenen Barriereschicht) sowie die Flexibilität für den Betriebseinsatz ausreichend sein.

Eine weitere besondere Herausforderung bestand dabei darin, eine Lösung zu finden, den Elastomerschlauch konstruktiv so aufzubauen, dass trotz limitierter Rohstoff- und Materialauswahl, die sich zum Teil widersprechenden Anforderungen der Regularien erfüllt werden können.

Insbesondere soll der Schlauch die aktuell gültigen deutschen Regularien (KTW-Bewertungsgrundlage (KTW-BWGL), Elastomerleitlinie (ELL), DIN EN 16421 (ehemals W270) und EU 10/2011) und-die aktuell gültige Brandschutzvorschrift der Deutschen Bahn (DIN EN 45545-2), insbesondere hinsichtlich der Parameter "Toxizität der Rauchgase", "Rauchgasdichte" und "Sauerstoffindex (LOI)", erfüllen.

Gelöst wird diese Aufgabe durch einen mehrschichtigen Schlauch gemäß Anspruch 1, insbesondere durch einen mehrschichtigen Schlauch, der folgende Schichten enthält:
- eine einlagige oder mehrlagige äußere Schicht auf Basis mindestens eines Elastomers und
- eine innere Schicht, umfassend ein metallenes Mehrschichtlaminat, das dadurch gekennzeichnet ist, dass das metallene Mehrschichtlaminat an den beiden Außenseiten jeweils eine Kunststoffschicht umfasst und zwischen diesen beiden Kunststoffschichten mindestens eine Metallschicht vorhanden ist und wobei auf den jeweils beiden Seiten der mindestens einen Metallschicht jeweils eine Klebeschicht vorhanden ist.

Nachfolgend werden zahlreiche spezifische Details erörtert, um ein umfassendes Verständnis des vorliegenden Gegenstands zu ermöglichen. Es ist jedoch für den Fachmann offensichtlich, dass der Gegenstand auch ohne diese spezifischen Details praktiziert und nachgearbeitet werden kann.

Alle Merkmale einer Ausführungsform können mit Merkmalen einer anderen Ausführungsform kombiniert werden, wenn die Merkmale der verschiedenen Ausführungsformen vereinbar sind.

Es versteht sich auch, dass, obwohl die Begriffe "erstes", "zweites" usw. hier zur Beschreibung verschiedener Elemente, insbesondere verschiedener Schichten, verwendet werden können, diese Elemente durch diese Begriffe nicht eingeschränkt werden sollen. Diese Begriffe werden nur verwendet, um ein Element von einem anderen zu unterscheiden. Zum Beispiel könnte ein erstes Objekt oder ein erster Schritt als zweites Objekt oder zweiter Schritt bezeichnet werden, und in ähnlicher Weise könnte ein zweites Objekt oder ein zweiter Schritt als erstes Objekt oder erster Schritt bezeichnet werden. Das erste Objekt bzw. der erste Schritt und das zweite Objekt bzw. der zweite Schritt sind beide Objekte bzw. Schritte, aber sie sind nicht als dasselbe Objekt bzw. derselbe Schritt zu betrachten.

Die in der Beschreibung der vorliegenden Offenbarung verwendete Terminologie dient nur der Beschreibung bestimmter Ausführungsformen und ist nicht als Einschränkung des Gegenstands zu verstehen. Wie in der vorliegenden Beschreibung und den Ansprüchen verwendet, sind die Singularformen "ein", "eine" und "die" so zu verstehen, dass sie auch die Pluralformen einschließen, sofern der Kontext nicht eindeutig etwas Anderes vorgibt. Dies gilt auch umgekehrt, d.h. die Pluralformen schließen auch die Singularformen ein. Es versteht sich auch, dass der Begriff "und/oder", wie er hier verwendet wird, sich auf alle möglichen Kombinationen von einem oder mehreren der zugehörigen aufgelisteten Elemente bezieht und diese einschließt. Es versteht sich weiterhin, dass die Begriffe "beinhaltet", "einschließlich", "umfasst" und/oder "umfassend", wenn sie in der vorliegenden Beschreibung und den Ansprüchen verwendet werden, das Vorhandensein der angegebenen Merkmale, Schritte, Operationen, Elemente und/oder Komponenten spezifizieren, aber nicht das Vorhandensein oder Hinzufügen eines oder mehrerer anderer Merkmale, Schritte, Operationen, Elemente, Komponenten und/oder Gruppen davon ausschließen.

In der vorliegenden Beschreibung und den Ansprüchen können die Begriffe "beinhaltet", "umfasst" und/oder "umfassend" auch "bestehend aus" bedeuten, d.h. das Vorhandensein oder Hinzufügen eines oder mehrerer anderer Merkmale, Schritte, Operationen, Elemente, Komponenten und/oder Gruppen wird ausgeschlossen.

Sofern nicht anders bezeichnet, beziehen sie alle Normen, Standards und Richtlinien jeweils auf die am Anmeldetag aktuellen und gültigen.

Unter Schlauch wird ein vorzugsweise flexibler länglicher Hohlkörper mit vorzugsweise im Wesentlichen rundem Querschnitt verstanden. Der Grad der Flexibilität ist nicht beschränkt, sodass auch im Wesentlichen unflexible, starre Hohlkörper unter den Begriff Schlauch subsumierter werden. Ein dichter Schlauch kann als Leitung zur Förderung fester, flüssiger und gasförmiger Stoffe verwendet werden, als deren Behälter dienen oder durch ein Medium im Innern erwünschte Eigenschaften erhalten.

Im Kontext der vorliegenden Beschreibung bezieht sich im Kontext des Schlauches das Innere, bzw. die innere Schicht, auf die Seite des Schlauches, die näher an der Seite, die mit dem den Schlauch durchströmenden Mediums in Kontakt steht, liegt. Das Äußere des Schlauches, bzw. die äußere Schicht, ist demnach die Seite des Schlauches, die näher an der Seite liegt, die mit der den Schlauch umgebenden Umwelt/Umgebung in Kontakt steht.

Die innere Schicht muss nicht die Schicht sein, die tatsächlich mit dem den Schlauch durchströmenden Medium in Kontakt steht. Die Schicht, die tatsächlich mit dem den Schlauch durchströmenden Medium in Kontakt steht, wird als innerste Schicht bezeichnet.

Die äußere Schicht muss nicht die Schicht sein, die tatsächlich mit der den Schlauch umgebenden Umwelt/Umgebung in Kontakt steht. Die Schicht, die tatsächlich mit der den Schlauch umgebenden Umwelt/Umgebung in Kontakt steht, wird als äußerste Schicht bezeichnet.

Damit kann der Schlauch beispielsweise wie folgt aufgebaut sein: Äußerste Schicht, äußere Schicht, innere Schicht und innerste Schicht.

Um die Anforderungen der beiden Regularien (Trinkwasser und Brandschutz) erfüllen zu können, wird in dem Schlauch ein metallenes Mehrschichtlaminat als totale Barriere verwendet.

Das metallene Mehrschichtlaminat umfasst dabei einem Mehrschichtverbund mit einem Aufbau, wobei an den beiden Außenseiten jeweils eine Kunststoffschicht umfasst und zwischen diesen beiden Kunststoffschichten mindestens eine Metallschicht vorhanden ist und wobei auf den jeweils beiden Seiten der mindestens einen Metallschicht jeweils eine Klebeschicht vorhanden ist.

Der erfindungsgemäße mehrschichtige Schlauch ist vorzugsweise dadurch gekennzeichnet, dass die mindestens eine Metallschicht Aluminium und/oder eine Aluminiumlegierung umfasst.

Vorzugsweise besteht die mindestens eine Metallschicht aus Aluminium oder einer Aluminiumlegierung, wobei vorzugsweise die Anforderungen der KTW-BWGL bzw. EG 1935/2004 erfüllt werden. Hierbei sind insbesondere die Aluminium-Legierungen EN AW-1235 oder EN AW-8079, besonders bevorzugt die Legierung EN AW-1235, geeignet.

Es ist auch der Einsatz von anderen Metallen, wie beispielsweise Kupfer, Eisen, Zinn, Silber, Blei, Nickel, Titan, Gold, Chrom und/oder Zink oder anderer Metalllegierungen, wie beispielsweise Messing, Bronze, Stahl, Edelstahl, und/oder Legierungen aus den oben angeführten Metallen, möglich.

Die Schichtdicke sollte dabei so gewählt werden, dass eine ausreichende Barriereeigenschaft bei gleichzeitig guter Flexibilität erzielt wird. Eine geeignete Metallschichtdicke liegt zwischen 5 µm bis 50 µm, vorzugsweise bei 9 µm oder größer, insbesondere bei 9 µm bis 50 µm.

Eine Schichtdicke von mindestens 9 µm ist vorteilhaft, da in der Trinkwasserregularie KTW-BWGL bzw. KTW-Leitlinie beschrieben wird, dass eine mindestens 9 µm dicke Glas- oder Metallschicht eine totale Barriere darstellt und bei der die dahinterliegenden Schichten für die Trinkwassereignung nicht mehr betrachtet werden müssen.

In dem metallenen Mehrschichtlaminat können eine oder mehrere Lagen der Metallfolie verwendet werden, bevorzugt aber nur eine Metallfolie (aufgrund der Flexibilität). Bei Einsatz mehrerer Metallfolienschichten in einem Schlauch, können diese entweder direkt nacheinander mittels dazwischenliegender Klebeschichten aufgebracht werden oder aber zwischen ihnen werden andere Schlauchschichten (z. B. Elastomerzwischenschicht, Gewebeschicht, usw.) eingebracht.

Das metallene Mehrschichtlaminat wird für die Schlauchproduktion vorzugsweise in Form einer Folie in zugeschnittener Streifenbreite eingesetzt. Dabei kann das metallene Mehrschichtlaminat gewickelt oder gefaltet aufgebracht werden (aber auch jede andere erdenkliche Aufbringungsart ist möglich). Das metallene Mehrschichtlaminat kann dabei auf Stoß (Material direkt aneinander liegend) oder überlappend verarbeitet werden. Wie in der Schlauchproduktion üblich, wird die-das metallene Mehrschichtlaminat dabei um einen Metall- oder Kunststoffdorn bzw. um eine Unterkonstruktion (z.B. Dorn inklusive erster Schlauchschichte(n)) gewickelt oder gefaltet.

Je nachdem in welcher Schlauchebene das metallene Mehrschichtlaminat eingesetzt wird, hat es entweder direkten Medien- bzw. Trinkwasserkontakt (als Innenschicht) oder indirekten Medienkontakt (als Zwischenschicht). Das metallene Mehrschichtlaminat im Sinne der Erfindung kann sowohl als Innenschicht, als innerste Schicht oder als auch als Zwischenschicht verwendet werden.

Bevorzugt ist der Einsatz als Zwischenschicht.

Der erfindungsgemäße mehrschichtige Schlauch ist vorzugsweise dadurch gekennzeichnet, dass die Kunststoffschichten an den beiden Außenseiten des metallenen Mehrschichtlaminats jeweils mindestens Polyethylen (PE), Polypropylen (PP),Polyamid (PA) inklusive Ihrer jeweiligen Variationen (z.B. PE-LD, PE-LLD, PE-HD, PA 6, PA 66), Polyethylenterephthalat (PET), Ethylen-Vinylalkohol (EVOH), Polystyrol (PS), Polyvinylchlorid (PVC), Polymilchsäure (PLA), Polymethylmethacrylat (PMMA), Polyetherimid (PEI), Polyetheretherketon (PEEK), Polycarbonat (PC), Polyphenylensulfid (PPS), Polyoxymethylen (POM), Polysulfon (PSU), Polyphthalamide (PPA), Polyethersulfon (PES) oder Fluorkunststoffe (wie z.B. PVDF, ETFE, THV, FEP, PFA, PTFE) und/oder andere biobasierende Kunststoffe, umfassen.

Besonders bevorzugt ist hierbei ein PE-LD (low density PE). Ein PE-LD zeichnet sich vorzugsweise durch seinen hohen Anteil an kurz- und langkettiger

Verzweigungen aus, der eine enge Zusammenlagerung der Polymerketten verhindert. Dadurch resultiert eine geringe Dichte, die vorzugsweise zwischen 0,915 g/cm³ und 0,935 g/cm³ liegt.

PE-LD lässt sich gut zu sehr dünnen Folien extrudieren, schmilzt bei relativ niedrigen Temperaturen (wichtig für eine gute Verschmelzung der Folien-Überlappstellen) und weist, ohne Zusatz eines Haftvermittlers, eine ideale Haftung zu gängigen Elastomermischungen (z.B. EPDM oder CM) und Kunststoffen (z.B. ultrahochmolekularem Polyethylen (UHMWPE) auf.

Die Kunststoffschicht fungiert vorzugsweise sowohl als Haftmittel zu einer angrenzenden Elastomer- oder weiteren Kunststoffschicht, als auch als funktionelle Barriereschicht.

Beide Kunststoffschichten bestehen dabei bevorzugt aus dem gleichen Materialtyp (z.B. PE-LD), können jedoch auch aus unterschiedlichen Materialien bestehen.

Der Vorteil bei der Wahl des gleichen Materialtyps besteht darin, dass bei jeglicher Art und Weise der Verarbeitung des metallenen Mehrschichtlaminates (z.B. Wickeln oder Falten) die innerste und äußerste Schicht immer aus dem gleichen Material besteht, was Vorteile in der Haftung und Verarbeitung (z.B. Verschweißung der Folie mit sich selbst bei Überlappung und gleiche Hafteigenschaften zur nächsten Schichtebene) mit sich bringt.

Die Kunststoffschicht sollte insbesondere konform mit der KTW-BWGL bzw. der Verordnung EU 10/2011 sein.

Die Schichtdicke sollte möglichst dünn sein, um eine gute Flexibilität des Schlauches zu erzielen. Eine geeignete Schichtdicke liegt zwischen 10 µm bis 300 µm, vorzugsweise zwischen 25 µm und 125 µm und besonders bevorzugt zwischen 50 µm und 80 µm.

Der erfindungsgemäße mehrschichtige Schlauch ist vorzugsweise dadurch gekennzeichnet, dass die Klebeschicht jeweils einen Klebstoff auf Basis eines 2-Komponenten-Polyurethan-Klebstoffes, vorzugsweise eines aromatischen 2-Komponenten-Polyurethan-Klebstoffes, umfasst.

Insbesondere handelt es sich bei dem Klebstoff um einen temperaturstabilen Klebstoff auf Basis eines 2-Komponeneten-Polyurethan-Klebstoffes, vorzugsweise eines aromatischen 2-Komponeneten-Polyurethan-Klebstoffes.

Besonders bevorzugt ist der Klebstoff lösungsmittelfrei.

Ganz besonders bevorzugt ist ein lösungsmittelfreier, temperaturstabiler aromatischer 2-Komponeneten-Polyurethanklebstoff, welcher koch- und sterilisationsbeständig ist und die Anforderungen der KTW-BWGL bzw. Verordnung EU 10/2011 erfüllt. Der Vorteil eines solchen Klebstoffe ist, dass er die hohen Vulkanisationstemperaturen übersteht und sich nicht durch Vulkanisationsspaltprodukte zersetzt.

Beispielsweise ist hier der Klebstoff eine Mischung aus Loctite Liofol LA7780 und Loctite Liofol LA6147 der Firma Henkel (Deutschland).

Die Schichtdicke der Klebeschicht sollte möglichst dünn sein, um einen guten Haftverbund zwischen Metallschicht und Kunststoffschicht zu gewährleisten. Eine geeignete Schichtdicke liegt zwischen 0,25 bis 10 µm, vorzugsweise zwischen 0,5 µm und 5 µm und ganz besonders bevorzugt zwischen 1 µm und 2,5 µm.

Das in dem erfindungsgemäßen Schlauch eingesetzte Elastomer ist im Wesentlichen nicht beschränkt.

Der erfindungsgemäße mehrschichtige Schlauch ist jedoch vorzugsweise dadurch gekennzeichnet, dass das Elastomer der Außenschicht ausgewählt ist aus der Gruppe bestehend aus Acrylatkautschuk (AEM + ACM), Ethylen-Vinylacetat-Kautschuk (EVA), Polybutadien (BR), chlorsulfoniertem Polyethylen (CSM), chloriertem Polyethylen (CM), Epichlorhydrin-Kautschuk (ECO), Chloroprenkautschuk (CR), Polyisopren (IR), Fluorkautschuk (FPM, FKM, FFKM), Styrol-Butadien-Kautschuk (SBR), Isobutylen-Isopren-Kautschuk (IIR), halogeniertem Isobutylen-Isopren- Kautschuk (CIIR + BIIR), Acrylnitril-Butadien-Kautschuk (NBR), teilhydriertem oder vollständig hydriertem Acrylnitrilbutadien-Kautschuk (HNBR), Verschnitte aus NBR mit PVC (NBR-PVC), teilhydriertem oder vollständig hydrierten carboxyliertem Acrylnitrilbutadien-Kautschuk, Ethylen-Propylen-Dien-Kautschuk (EPDM), Ethylen-Propylen-Kautschuk (EPM), Naturkautschuk (NR), bromiertem Isobutylen-Paramethylstyrol-Kautschuk, Silikonkautschuk (MVQ), thermoplastischen Elastomeren, wie thermoplasischem Copolyamid (TPA-A), thermoplastischem Polyesterelastomer (TPE-E), thermoplastischen Elastomeren auf Olefinbasis (TPE-O), Styrol-Blockcopolymeren (TPE-S), thermoplastischen Elastomeren auf Urethanbasis (TPE-U), thermoplastischen Vulkanisaten oder vernetzte thermoplastische Elastomere auf Olefinbasis (TPE-V), sowie Mischungen, Verschnitte und Copolymeren davon.

Besonders bevorzugt sind hierbei EPDM, EPM, CM, NR, IIR, BIIR, CIIR, CR, SBR und/oder NBR.

Diese Elastomere können entweder chemisch vernetzt, insbesondere irreversibel chemisch vernetzt, oder unvernetzt vorliegen.

Irreversibel vernetzte Elastomere werden im Allgemeinen durch Vulkanisation von natürlichen und synthetischen Kautschuken hergestellt. Unter Vulkanisation versteht man die Überführung von plastischen, kautschukartigen, ungesättigten oder gesättigten Polymeren in den gummielastischen Zustand, klassischerweise durch Vernetzung mit Schwefel(-Verbindungen). Dabei werden die einzelnen Polymerketten irreversibel durch kovalente Bindungen miteinander verbunden. Bei manchen Synthesekautschuken -insbesondere bei hoch oder vollständig gesättigten Kautschuken - werden schwefelfreie Vernetzer als Vulkanisationsmittel verwendet, wie z.B. Peroxide, Harze, Metalloxide (MgO, ZnO), Diamine oder Bisphenole.

Geeignete Peroxide umfassen hierbei z. B.
2,5-Dimethyl-2,5-bis-(tert.-butylperoxi)hexan (DTBPH),
1,4-Bis-(tert.-butylperoxi-isopropyl)-benzol (TBPDB),
1,1-Di-tert.-butyl-peroxi-3,3,5-trimethyl-cyclohexan (TBPTC), Dicumylperoxid (DCP) etc., ggf. in Kombination mit Coagenzien, wie insbesondere Ethylenglycoldimethylacrylat (EDMA), Triallylcyanurat (TAC), Trimethylolpropantrimethacrylat (TRIM) und/oder Diallylphtalat (DAP), oder andere gängige Peroxide, wie sie im Buch "Kautschuktechnologie (Werkstoffe-Verarbeitung-Produkte) 3.Auflage" von F. Röthemeyer/F. Sommer beschrieben sind.

Wenn die äußere Schicht des erfindungsgemäßen Schlauches mehrlagig ausgebildet ist, umfasst diese bevorzugt jeweils eine Elastomerlage, wie vorstehend definiert, auf den beiden äußersten Seiten der mehrlagigen Außenschicht.

Zwischen diesen beiden äußersten Elastomerlagen können beispielsweise weitere Schichten, wie Festigkeitsträger, Wendel, oder weitere Elastomerschichten sowie Klebschichten oder Haftvermittlerschichten, vorhanden sein.

Vorzugsweise enthält die äußere mehrlagige Schicht mindestens einen Festigkeitsträger, beispielsweise umfassend ein Cord, Geflecht oder Gewebe.

Als Materialien für den Festigkeitsträger können alle der fachkundigen Person bekannten und geeigneten Materialien verwendet werden, die bevorzugt aus der Gruppe ausgewählt sind, bestehend aus: Polyamid (PA), z.B. PA6, PA6.6, PA11, PA12, PA6.10, PA6.12, und/oder Copolyamiden und/oder Polyestern (PES) und/oder Rayon und/oder Polyethylenterephthalat (PET) und/oder Polyethylennaphthalat (PEN) und/oder Polybutylenterephthalat (PBT) und/oder Polycarbonat (PC) und/oder ungesättigtem Polyesterharz (UP) und/oder Poly(1,4-cyclohexandimethylenterephthalat) (PCDT) und/oder Polyvinylalkohol (PVAL) und/oder Polyoxibenzonaphtoat und/oder Polyvinylacetal (PVA) und/oder Polyetheretherketon (PEEK) und/oder Polyethylen-2,6-naphthalat (PEN) und/oder Polyphenylen und/oder Polyphenylenoxid (PPO) und/oder Polyphenylensulfid (PPS) und/oder Polyphenylenether und/oder Polybenzoxazol (PBO) und/oder Polyoxadiazol (POD) und/oder Polyetherimid (PEI) und/oder m-Aramid und/oder p-Aramid und/oder Glas und/oder Metall und/oder Keramik und/oder Kohlefaser und/oder Wolle und/oder Baumwolle und/oder Polypropylen (PP) und/oder Polyethylen (PE) und/oder ultrahochmolekulares PE (UPE) und/oder modifizierte Viskose und/oder hochkristallinen Polymerfasern und/oder Fluorpolymeren, wie, Polytetrafluorethylen (PTFE) und Perfluorethylenpropylen (FEP), und/oder Fluor-Copolymeren, wie insbesondere Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE) und/oder eine Hybridvariante der genannten Materialien.

Besonders bevorzugt sind Festigkeitsträger, die Polyamid, Polyester, Rayon, Aramid, Polyvinylalkohol, Polyphenylensulfid, Polyetheretherketon, Stahl, Edelstahl, Kohlefaser, Glasfaser und/oder Kombinationen daraus umfassen oder daraus bestehen.

Der erfindungsgemäße mehrschichtige Schlauch ist vorzugsweise dadurch gekennzeichnet, dass die Außenschicht mehrlagig ausgeführt ist und mindestens zwei Lagen auf Basis mindestens eines Elastomers und mindestens einen dazwischenliegenden Festigkeitsträger aufweist, wobei der Festigkeitsträger mindestens eines der vorstehend genannten Materialien umfasst oder daraus besteht. Insbesondere umfasst der Festigkeitsträger ein Cord, Geflecht oder Gewebe aus diesen Materialien.

Besonders bevorzugt sind Festigkeitsträger, die Polyamid, Polyester, Rayon, Aramid, Polyvinylalkohol, Polyphenylensulfid, Polyetheretherketon, Stahl, Edelstahl, Kohlefaser, Glasfaser und/oder Kombinationen daraus umfassen oder daraus bestehen.

Sind in der mehrlagigen äußeren Schicht ein oder mehrere Wendel vorhanden, umfassen diese vorzugsweise Wendeln aus Kunststoffen, wie z.B. Polyester, Polyamid oder aus Metall, wie z.B. Stahl, Edelstahl. Diese können auch zum Schutz oberflächig behandelt/modifiziert sein (z. B. vermessingt, verzinkt, usw.).

Sind in der mehrlagigen äußeren Schicht weitere Elastomerzwischenschichten vorhanden, so umfassen diese vorzugsweise Acrylatkautschuke (AEM + ACM), Ethylen-Vinylacetat-Kautschuk (EVA), Polybutadien (BR), chlorsulfoniertem Polyethylen (CSM), chloriertem Polyethylen (CM), Epichlorhydrin-Kautschuk (ECO), Chloroprenkautschuk (CR), Polyisopren (IR), Fluorkautschuk (FPM, FKM, FFKM), Styrol-Butadien-Kautschuk (SBR), Isobutylen-Isopren-Kautschuk (IIR), halogeniertem Isobutylen-Isopren- Kautschuk (CIIR + BIIR), Acrylnitril-Butadien-Kautschuk (NBR), teilhydriertem oder vollständig hydriertem Acrylnitrilbutadien-Kautschuk (HNBR), Verschnitte aus NBR mit PVC (NBR-PVC), teilhydriertem oder vollständig hydrierten carboxyliertem Acrylnitrilbutadien-Kautschuk, Ethylen-Propylen-Dien-Kautschuk (EPDM), Ethylen-Propylen-Kautschuk (EPM), Naturkautschuk (NR), bromiertem Isobutylen-Paramethylstyrol-Kautschuk, Silikonkautschuk (MVQ), thermoplastischen Elastomeren, wie thermoplasischem Copolyamid (TPA-A), thermoplastischem Polyesterelastomer (TPE-E), thermoplastischen Elastomeren auf Olefinbasis (TPE-O), Styrol-Blockcopolymeren (TPE-S), thermoplastischen Elastomeren auf Urethanbasis (TPE-U), thermoplastischen Vulkanisaten oder vernetzte thermoplastische Elastomere auf Olefinbasis (TPE-V),sowie Mischungen, Verschnitte und Copolymeren davon.

Diese Elastomere, können, wie vorstehend definiert, unvernetzt oder vernetzt vorliegen.

Der erfindungsgemäße mehrschichtige Schlauch ist vorzugsweise dadurch gekennzeichnet, dass die innerste Schicht des Schlauches, also die Schicht, die unmittelbar mit dem den Schlauch durchströmenden Medium in Kontakt steht, ein ultrahochmolekulares Polyethylen, vorzugsweise mit einem Molekulargewicht von 2.000.000 bis 6.000.000 g/mol, umfasst oder daraus besteht. Das Molekulargewicht bezieht sich dabei auf das, das von dem jeweiligen Hersteller angegeben wird. Geeignete ultrahochmolekulare Polyethylene werden beispielsweise von den Firmen Celanese oder Mitsui kommerziell vertrieben.

Ein solches ultrahochmolekulares Polyethylen wird auch als UHMWPE oder UPE bezeichnet. Aufgrund seines hohen Molekulargewichts kann es nicht wie andere Kunststoffe thermoplastisch extrudiert werden, sondern es wird zuvor als Block gesintert und daraus eine Folie in gewünschter Breite geschält. Diese Folien können transparent oder eingefärbt (z.B. weiß oder schwarz) sein. Für den Aufbau des Schlauches werden die Folien um einen Dorn gewickelt oder gefaltet.

Eine solche UHMWPE-Schicht als innerste Schicht ist vorteilhaft, da sie eine ideale Haftung zur Kunststoffschicht des metallenen Mehrschichtlaminats gewährleistet, eine zusätzliche funktionelle Barriere gegen Migration aus Kunststoff- bzw. Klebeschicht darstellt, eine hohe Temperaturbeständigkeit (hoher Schmelz- / Erweichungspunkt) aufweist, eine sehr gute chemische Beständigkeit zeigt, eine hohe Abriebbeständigkeit und eine optische Abdeckung des metallenen Mehrschichtlaminates (kein Metallic-Effekt) gewährleistet und eine Zulassung nach Trinkwasserregularien bzw. Verordnung EU 10/2011 aufweist.

Eine geeignete Schichtdicke liegt hierbei bei 50 µm bis 400 µm, vorzugsweise bis 100 µm bis 400 µm, besonders bevorzugt bei 100 µm bis 250 µm.

Wie bereits vorstehend definiert, zeichnet sich das metallene Mehrschichtlaminat dadurch aus, dass es an den beiden Außenseiten jeweils eine Kunststoffschicht umfasst und zwischen diesen beiden Kunststoffschichten mindestens eine Metallschicht vorhanden ist und wobei auf den jeweils beiden Seiten der mindestens einen Metallschicht jeweils eine Klebeschicht vorhanden ist.

Zwischen den beiden äußersten Kunststoffschichten kann der Aufbau jedoch variiert werden.

So können mehrere Metallschichten mit jeweils dazwischenliegenden Klebeschichten vorliegen (Klebeschicht/Metallschicht/Klebeschicht/ Metallschicht/Klebeschicht....)

Es können ferner mehrere alternierende Schichten der Abfolge Klebeschicht/Metallschicht/Klebeschicht/Kunststoffschicht/Klebeschicht vorliegen.

Es sind auch weitere Permutationen aus Metall und Kunststoffschichten mit dazwischenliegenden Klebeschichten möglich, sodass hier alle möglichen Kombinationen explizit mitoffenbart sind.

Lediglich beispielhaft sind die folgenden drei Schichtfolgen besonders bevorzugt:
Kunststoffschicht/Klebeschicht/Metallschicht/Klebeschicht/Kunststoffschicht oder Kunststoffschicht/Klebeschicht/Metallschicht/Kleberschicht/Metallschicht/Klebeschi cht/Kunststoffschicht oder Kunststoffschicht/Klebeschicht/Metallschicht/Klebeschicht/Kunststoffschicht Klebeschicht/Metallschicht/Klebeschicht/Kunststoffschicht.

Bei all diesen Schichtkombinationen sind die Kunststoffschicht, die Klebeschicht und die Metallschicht jeweils wie vorstehend definiert zu verstehen.

Der erfindungsgemäße mehrschichtige Schlauch umfasst vorzugsweise die in der Kunststoff- bzw. Elastomerindustrie üblicherweise verwendeten Additive. Diese umfassen beispielsweise Additive, ausgewählt aus der Gruppe, bestehend aus Füllstoffen wie z.B. Siliziumdioxid (Silica/Kieselsäure), Kaolin, Glimmer, Graphit, Carbon Nanotubes, Kohlefasern, Ruß, Fettsäuren (wie z.B. Palmitin- oder Stearinsäure), Weichmacher (wie z.B. mineralisches Weißöl oder Ester-Weichmacher), Gleitmittel, Polyethylenglycol, Geruchsabsorber, antimikrobiellen Substanzen, detektierbare Füllstoffe (wie z.B. Eisenpartikel oder Magnetit), organischen und anorganischen Farbpigmenten (wie z.B. Titandioxid), Haftvermittler, Verarbeitungshilfsmittel, Flammschutzmittel (wie z.B. Mg(OH)2, Al(OH)3, Gips, Intumeszenz-Verbindungen wie Blähgraphit), Alterungsschutzmittel, Metalloxiden und Metallhydroxiden und Metallcarbonate, Verzögerern, Aktivatoren, Faktis, Vernetzungsmittel (wie z.B. Peroxide, Schwefel, Schwefelbeschleuniger, Harze, usw.), oder andere Additive, wie sie in "Kautschuktechnologie (Werkstoffe-Verarbeitung-Produkte) 3. Auflage" von F. Röthemeyer/F. Sommer beschrieben sind.

Da durch den Einsatz des metallenen Mehrschichtlaminates auch der Einsatz von Flammschutzmitteln möglich ist, die nicht in der Positivliste aufgeführt sind, können hier auch Zinkborate und Zinkstannate, organische und anorganische Phosphorverbindungen, Antimontrioxid und/oder halogenhaltige Flammschutzmittel eingesetzt werden.

Diese können jeweils in den vorhanden Elastomerschichten aber auch in den Kunststoffschichten vorhanden sein.

Hinsichtlich des Herstellungsverfahrens unterliegt der erfindungsgemäße mehrschichtige Schlauch keinen speziellen Einschränkungen. Die einzelnen Schichten des erfindungsgemäßen mehrschichtigen Schlauches können durch die dem Fachmann bekannte übliche Verfahren hergestellt werden.

Besonders bevorzugt wird der erfindungsgemäße mehrschichtige Schlauch nach einem Verfahren hergestellt, das die folgenden Schritte umfasst:
- optionales Bereitstellen einer UHMWPE-Folie, wobei die Folie überlappend oder auf Stoß um einen Metall- oder Kunststoffdorn der gewünschten Schlauchdimension gewickelt oder gefaltet wird.
- Bereitstellen eines metallenen Mehrschichtlaminats (Folie), wobei auf beiden Seiten einer Metallfolie eine Klebeschicht aufgebracht wird, auf die jeweils eine Kunststoffschicht aufgebracht wird. Das metallene Mehrschichtlaminat (Folie) wird ggf. ebenfalls überlappend oder auf Stoß über die gewickelte oder gefaltete UHMWPE-Folie gewickelt oder gefaltet.
- Bereitstellen der einlagigen oder mehrlagigen äußeren Schicht auf Basis mindestens eines Elastomers, insbesondere durch Extrudieren, Kalandrieren und/oder Spritzgießen, um einen Schlauchrohling zu erhalten. Dabei wird vorzugsweise über die erste Elastomerschicht bzw. zwischen die Elastomerschichten eine (oder mehrere) Festigkeitsträgerschicht(en) (z. B. Geflecht, Cordlagen, Gewirk) eingebracht. Zudem kann in dieser äußeren Schicht eine Metall- oder Kunststoffwendel eingearbeitet werden. Der äußere Schichtaufbau ist dabei abhängig vom Schlauchdurchmesser und frei in der Gestaltung.
- Einwickeln des Schlauchrohlings in einen Heizwickel oder Umspritzen des Schlauchrohlings mit in einem Kunststoff- oder Metallmantel, welcher als Schutzmantel für die Vulkanisation dient. Alternativ auch keines der beiden beschriebenen Verfahren (im Fall einer Freiheizung).
- Vulkanisation des eingewickelten (mit dem metallenen Mehrschichtlaminat konfektionierten) Schlauchrohlings.

Die vorliegende Erfindung betrifft zudem einen mehrschichtigen Schlauch, erhältlich gemäß dem vorstehend beschriebenen Verfahren.

Dabei gelten alle für den mehrschichtigen Schlauch beschriebenen bevorzugten Ausführungsformen analog für das erfindungsgemäße Verfahren.

Der erfindungsgemäße mehrschichtige Schlauch unterliegt bezüglich seiner Verwendung keinen Einschränkungen und kann insbesondere ein Trinkwasser-, Lebensmittel-, Pharma-, Klima- oder Gasschlauch, besonders bevorzugt jedoch ein Trinkwasserschlauch sein. Besonders bevorzugt handelt es sich bei dem erfindungsgemäßen mehrschichtigen Schlauch um einen Trinkwasserschlauch zum Einsatz in einem Schienenfahrzeug.

Die vorliegende Erfindung betrifft demnach auch die Verwendung eines mehrschichtigen Schlauchs, wie vorstehend beschrieben oder durch das vorstehend beschriebene Verfahren erhältlich, als Trinkwasser-, Lebensmittel-, Pharma-, Klima- oder Gasschlauch, insbesondere als Trinkwasserschlauch.

Die vorliegende Erfindung betrifft bevorzugt die Verwendung eines mehrschichtigen flexiblen Schlauchs, wie vorstehend beschrieben oder durch das vorstehend beschriebene Verfahren erhältlich, als Trinkwasserschlauch in einem Schienenfahrzeug.

Als besondere Vorteile der vorliegenden Erfindung kann noch folgendes herausgestellt werden.

Aufgrund des Einsatzes des metallenen Mehrschichtlaminates als totale Barriereschicht im Trinkwasserschlauch, lassen sich die teilweise in sich widersprüchlichen Regelanforderungen (Trinkwasser vs. Brandschutz) dennoch beide erfüllen, da durch sie der Einsatz nicht gelisteter Flammschutzmittel in den äußeren Elastomerschichten ermöglicht wird und damit die Anforderungen der Brandnorm DIN EN 45545-2 erfüllt werden kann. Zudem dient sie als totale Sperre jeglicher migrierfähigen Stoffe aus der äußeren Schicht.

Der Nachweis der Eignung des Schlauches konnte durch positive Prüfergebnisse nach KTW-BWGL und Brandprüfungen nach EN 45545 belegt werden.

Mit dem metallenen Mehrschichtlaminat lassen sich alle gängigen Schlauchdurchmesser/Nennweiten mit den üblichen Produktionsmethoden unkompliziert und kostengünstig herstellen (keine Spezialverfahren notwendig). Es konnte gezeigt werden, dass bei Auswahl der richtigen Materialien/Werkstoffe und geeigneten Schichtstärken ein in allen Schichten gut haftender und flexibler/elastischer Schlauch (d.h. ein Schlauch der keine bleibende plastische Verformung nach Biegung aufweist) hergestellt werden kann, welcher für den Einsatz als Trinkwasserschlauch in der Bahnanwendung geeignet ist. Ebenso konnte der Schlauch konstruktiv so aufgebaut werden, dass die hohen hygienischen Anforderungen an einen Trinkwasserschlauch erfüllt werden. Durch das Einbringen einer totalen Barriereschicht in den Schlauch wird die freie Auswahl der Rohstoffe für die Elastomere der äußeren Schlauchschichten ermöglicht, wodurch diese mit dem erforderlichen Brandschutz ausgestattet werden können. Zugleich verhindert sie effektiv eine Migration von Substanzen der äußeren Elastomerschichten ins Trinkwasser. Insbesondere der bevorzugte 2K-PU-Kleber ermöglicht eine temperaturstabile und dauerhaft feste Haftung der Aluminiumschicht zur nächsten Kunststoffschicht, wodurch eine Delaminierung dieser kritischsten Schichtebene verhindert wird.

Die Erfindung wird anschließend durch nicht beschränkende Beispiele näher erläutert.

Beispiele:
Es wurden mehrschichtige Schläuche mit folgendem Aufbauten (von innen nach außen) hergestellt:
1) UPE-Folie schwarz, oder weiß, oder transparent (einfach überlappend gewickelt)
2) PE-LD transparent
3) 2K-PU-Kleber
4) Aluminiumschicht
5) 2K-PU-Kleber
6) PE-LD
7) Elastomer (z.B. EPDM, oder CM, NR...)
8) Festigkeitsträger (Cord, Geflecht, Gewebe, aus PES, PA, Rayon, Aramid,....)
9) Elastomer (Außengummi, z.B. EPDM, oder CM)

Die Schichten 2 bis 6 bilden hierbei das metallene Mehrschichtlaminat.

Zwischen den Schichten 7 und 9 können weitere Schichten wie eine Elastomerzwischenschicht, Wendel und/oder weitere Festigkeitsträger vorliegen.

Aufgrund der Verwendung der Aluminiumschicht als totale Barriereschicht brauchen die äußeren Schichten 5 bis 9 des Schlauches für die Trinkwassereignung nicht mehr betrachtet/beurteilt werden.

Somit können auch Stoffe in den äußeren Elastomeren eingesetzt werden, welche nicht in den Positivlisten enthalten sind (u. a. effektive Brandschutzmittel).

Dadurch ist man frei in der Auswahl, um einen effektiven Brandschutz des Schlauches zu erreichen.

Ferner wurde ein Schlauch mit dem folgenden Aufbau hergestellt.
1) UPE-Folie schwarz (einfach überlappend gewickelt)
2) PE-LD transparent
3) 2K-PU-Kleber
4) Aluminiumschicht
5) 2K-PU-Kleber
6) PE-LD
7) Elastomer (CM)
8) Festigkeitsträger (Rayon)
9) Elastomer (Außengummi, EPDM)

Dieser Schlauch mit dem vorstehend aufgeführten Aufbau wurde der Prüfung gemäß KTW-BWGL (Ausgabe 2021-03-09) unterzogen.

Es wurden alle gemäß KTW-BWGL für eine Erstprüfung in der Produktkategorie P1 (Rohre mit ID ≤ 80 mm) im Kaltwasser (23 ± 2 °C) und Warmwasser (60 ± 2 °C) erforderlichen Prüfungen durchgeführt und bestanden. Insbesondere erfüllt der Schlauch die Anforderungen an die Zusammensetzung gemäß Kapitel 5.2 und die Anforderungen an die Förderung des mikrobiellen Wachstums gemäß Kapitel 5.6.

Ein Schlauch mit dem oben aufgeführten Aufbau wurde ferner einer Prüfung nach EN 16421:2015 Methode 2, "Einfluss von Materialien auf Wasser für den menschlichen Gebrauch - Vermehrung von Mikroorganismen", unterzogen.

Basierend auf diesen Prüfergebnissen und unter Berücksichtigung der Anforderungen des Kapitels 5.6 der KTW-Bewertungsgrundlage ist der Schlauch aufgrund der Ergebnisse der vorgenommenen Prüfung unter der Voraussetzung einer den Vorgaben des Herstellers entsprechenden ordnungsgemäßen Verarbeitung in mikrobiologischer Hinsicht für den generellen Einsatz im Trinkwasserkontakt geeignet.

Ein Schlauch mit dem oben aufgeführten Aufbau wurde ferner einer Prüfung nach DIN EN 45545-2:2020-10 unterzogen.

Der Schlauch erfüllt den Anforderungssatz R22/R23 für die Gefährdungsstufe HL3/HL3.

Ferner wird davon ausgegangen, dass auch ein Schlauch mit dem folgenden Aufbau die vorstehend genannten Trinkwassertests besteht.
1) UPE-Folie weiß oder transparent (einfach überlappend gewickelt)
2) PE-LD transparent
3) 2K-PU-Kleber
4) Aluminiumschicht
5) 2K-PU-Kleber
6) PE-LD
7) Elastomer (CM)
8) Festigkeitsträger (PES)
9) Elastomer (Außengummi, CM)

## Patentansprüche

1. Mehrschichtiger Schlauch, der folgende Schichten enthält:
- eine einlagige oder mehrlagige äußere Schicht auf Basis mindestens eines Elastomers und
- eine innere Schicht, umfassend ein metallenes Mehrschichtlaminat, **dadurch gekennzeichnet, dass** das metallene Mehrschichtlaminat an den beiden Außenseiten jeweils eine Kunststoffschicht umfasst und zwischen diesen beiden Kunststoffschichten mindestens eine Metallschicht vorhanden ist und wobei auf den jeweils beiden Seiten der mindestens einen Metallschicht jeweils eine Klebeschicht vorhanden ist.

2. Mehrschichtiger Schlauch gemäß Anspruch 1, **dadurch gekennzeichnet, dass** die mindestens eine Metallschicht Aluminium und/oder eine Aluminiumlegierung umfasst.

3. Mehrschichtiger Schlauch gemäß irgendeinem der vorhergehenden Ansprüche, **dadurch gekennzeichnet, dass** die Kunststoffschichten an den beiden Außenseiten des metallenen Mehrschichtlaminat jeweils mindestens Polyethylen (PE), Polypropylen (PP), Polyamid (PA) inklusive Ihrer jeweiligen Variationen, Polyethylenterephthalat (PET), Ethylen-Vinylalkohol (EVOH), Polystyrol (PS), Polyvinylchlorid (PVC), Polymilchsäure (PLA), Polymethylmethacrylat (PMMA), Polyetherimid (PEI), Polyetheretherketon (PEEK), Polycarbonat (PC), Polyphenylensulfid (PPS), Polyoxymethylen (POM), Polysulfon (PSU), Polyphthalamide (PPA), Polyethersulfon (PES) oder Fluorkunststoffe (wie z.B. PVDF, ETFE, THV, FEP, PFA, PTFE) und/oder andere biobasierende Kunststoffe umfassen.

4. Mehrschichtiger Schlauch gemäß irgendeinem der vorhergehenden Ansprüche, **dadurch gekennzeichnet, dass** die Klebeschicht jeweils einen Klebstoff auf Basis eines 2-Komponeneten Polyurethan Klebstoffes, vorzugsweise eines aromatischen 2-Komponeneten Polyurethan Klebstoffes, umfasst.

5. Mehrschichtiger Schlauch gemäß irgendeinem der vorhergehenden Ansprüche, **dadurch gekennzeichnet, dass** das Elastomer der Außenschicht ausgewählt ist aus der Gruppe bestehend aus Acrylatkautschuk (AEM+ACM), Ethylen-Vinylacetat-Kautschuk (EVA), Polybutadien (BR), chlorsulfoniertem Polyethylen (CSM), Chloriertes Polyethylen (CM), Epichlorhydrin-Kautschuk (ECO), Chloroprenkautschuk (CR), Polyisopren (IR), Fluorkautschuk (FPM, FKM, FFKM), Styrol-Butadien-Kautschuk (SBR), Isobutylen-Isopren-Kautschuk (IIR), halogeniertem Isobutylen-Isopren- Kautschuk (CIIR + BIIR), Acrylnitril-Butadien-Kautschuk (NBR), teilhydriertem oder vollständig hydriertem Acrylnitrilbutadien-Kautschuk (HNBR), Verschnitte aus NBR mit PVC (NBR-PVC), teihydriertem oder vollständig hydriertem carboxylierten Acrylnitrilbutadien-Kautschuk, Ethylen-Propylen-Dien-Kautschuk (EPDM), Ethylen-Propylen- Kautschuk (EPM), Naturkautschuk (NR), bromiertem Isobutylen-Paramethylstyrol-Kautschuk, Silikonkautschuk (MVQ), thermoplastischen Elastomeren, wie thermoplasischem Copolyamid (TPA-A), thermoplastischem Polyesterelastomer (TPE-E), thermoplastischen Elastomeren auf Olefinbasis (TPE-O), Styrol-Blockcopolymeren (TPE-S), thermoplastischen Elastomeren auf Urethanbasis (TPE-U), thermoplastischen Vulkanisaten oder vernetzte thermoplastische Elastomere auf Olefinbasis (TPE-V), sowie Mischungen, Verschnitte und Copolymeren davon.

6. Mehrschichtiger Schlauch gemäß irgendeinem der vorhergehenden Ansprüche, **dadurch gekennzeichnet, dass** die Außenschicht mehrlagig ausgeführt ist und mindestens zwei Lagen auf Basis mindestens eines Elastomers und mindestens einen dazwischenliegenden Festigkeitsträger aufweist.

7. Mehrschichtiger Schlauch gemäß Anspruch 6, **dadurch gekennzeichnet, dass** der mindestens eine Festigkeitsträger Polyamid, Polyester, Rayon, Aramid, Polyvinylalkohol, Polyphenylensulfid, Polyetheretherketon Stahl, Edelstahl, Kohlefaser, Glasfaser und/oder Kombinationen daraus umfasst oder daraus besteht.

8. Mehrschichtiger Schlauch gemäß irgendeinem der vorhergehenden Ansprüche, **dadurch gekennzeichnet, dass** der mehrlagige Schlauch als innerste Schicht mindestens ein ultrahochmolekulares Polyethylen, vorzugsweise mit einem Molekulargewicht von 2.000.000 bis 6.000.000 g/mol, aufweist.

9. Mehrschichtiger Schlauch gemäß irgendeinem der vorhergehenden Ansprüche, **dadurch gekennzeichnet, dass** die mindestens eine Metallschicht eine Dicke von 5 bis 50 µm, insbesondere von 9 µm bis 50 µm, aufweist.

10. Mehrschichtiger Schlauch gemäß irgendeinem der vorhergehenden Ansprüche, **dadurch gekennzeichnet, dass** das metallene Mehrschichtlaminat mindestens den folgenden Schichtaufbau aufweist: Kunststoffschicht/Klebeschicht/Metallschicht/Klebeschicht/Kunststoffschicht, oder Kunststoffschicht/Klebeschicht/Metallschicht/Kleberschicht/Metallschicht/Klebeschi cht/Kunststoffschicht, oder Kunststoffschicht/Klebeschicht/Metallschicht/Klebeschicht/Kunststoffschicht Klebeschicht/Metallschicht/Klebeschicht/Kunststoffschicht.

11. Verfahren zur Herstellung eines mehrschichtigen Schlauchs gemäß irgendeinem der Ansprüche 1 bis 10, umfassend die Schritte:
- Bereitstellen eines metallenen Mehrschichtlaminats, wobei auf beiden Seiten einer Metallfolie eine Klebeschicht aufgebracht wird, auf die jeweils eine Kunststoffschicht aufgebracht wird,
- Bereitstellen der einlagigen oder mehrlagigen äußeren Schicht auf Basis mindestens eines Elastomers, insbesondere durch Extrudieren, Kalandrieren und/oder Spritzgießen, um einen Schlauchrohling zu erhalten,
- Einwickeln des Schlauchrohlings in einen Heizwickel oder Umspritzen des Schlauchrohlings mit in einem Kunststoff- oder Metallmantel, welcher als Schutzmantel für die Vulkanisation dient.
- Vulkanisation des eingewickelten Schlauchrohlings.

12. Mehrschichtiger Schlauch erhältlich gemäß dem Verfahren nach Anspruch 11.

13. Verwendung eines mehrschichtigen Schlauches nach mindestens einem der Ansprüche 1 bis 10 oder Anspruch 12 als Trinkwasser-, Lebensmittel-, Pharma-, Klima- oder Gasschlauch, insbesondere als Trinkwasserschlauch.
